# EUROPÄISCHE PATENTANMELDUNG

(11) **EP 3 567 505 A1**
(43) Veröffentlichungstag der Anmeldung: **13.11.2019**
(21) Anmeldenummer: 18171226.6
(22) Anmeldetag: 08.05.2018
(51) Int. Cl.: G06F 21/57, G06Q 30/02, H02M 7/00, H02J 3/38

(54) **ZUSAMMENSTELLUNG VON KOMPONENTEN FÜR EIN UMRICHTERSYSTEM**

(71) Anmelder: Woodward Kempen GmbH, 47906 Kempen (DE)
(72) Erfinder: Hartmann, Eric, 47906 Kempen (DE)
(74) Vertreter: Cohausz & Florack

(57) **Zusammenfassung**

Die Erfindung betrifft ein Verfahren zur Herstellung einer Zusammenstellung von Komponenten (202, 204, 302, 306, 308a-c, 312a-b, 314) für ein Umrichtersystem, insbesondere für ein Umrichtersystem für Stromerzeugungsanlagen, beispielsweise Windkraftanlagen. Die Aufgabe, ein Verfahren anzugeben, welches den Aufbau, die Wartung und/oder Reparatur von Umrichtersystemen erleichtert und zuverlässiger gestaltet, wird gelöst durch ein Verfahren umfassend: Bereitstellen (102) von mindestens zwei Komponenten für ein Umrichtersystem, wobei jede der mindestens zwei Komponenten mindestens ein Trägerelement (206, 208) aufweist; Abgleich (106) einer Zertifizierung der mindestens zwei Komponenten anhand der Trägerelemente; und Erlauben (108) des Verbindens der mindestens zwei Komponenten nur dann, wenn die jeweiligen Trägerelemente für einander zertifiziert sind. Die Erfindung betrifft weiter eine Komponente für ein Umrichtersystem, eine Vorrichtung, welche dazu eingerichtet ist oder entsprechende Mittel umfasst, ein erfindungsgemäßes Verfahren durchzuführen und/oder zu steuern sowie ein System.

## Beschreibung

Die Erfindung betrifft ein Verfahren zur Herstellung einer Zusammenstellung von Komponenten für ein Umrichtersystem, insbesondere für ein Umrichtersystem für Stromerzeugungsanlagen, beispielsweise Windenergieanlagen. Die Erfindung betrifft weiter eine Komponente für ein Umrichtersystem, insbesondere für ein Umrichtersystem für Stromerzeugungsanlagen, die Komponente aufweisend: mindestens ein Verbindungselement, welches dafür eingerichtet ist, die Komponente mit mindestens einer weiteren Komponente zu verbinden; und mindestens ein Trägerelement. Die Erfindung betrifft auch eine Vorrichtung, welche dazu eingerichtet ist oder entsprechende Mittel umfasst, ein erfindungsgemäßes Verfahren durchzuführen und/oder zu steuern sowie ein System umfassend mehrere Vorrichtungen, welche zusammen ein erfindungsgemäßes Verfahren durchführen.

Durch den Ausbau der regenerativen Stromerzeugung und durch die Inbetriebnahme von Windenergieanlagen, Photovoltaikanlagen, Wasserspeicherkraftwerken aber auch durch dezentral Strom erzeugende Blockheizkraftwerke werden zunehmend Stromerzeugungsanlagen ans Netz gebracht, welche den erzeugten Strom über Umrichtersysteme ins Stromnetz einspeisen. Wechselrichter werden dabei üblicherweise aus einem Gleichspannungskreis gespeist, auch als Gleichspannungszwischenkreis bezeichnet, und erzeugen eine phasenrichtige Netzspannung zur Einspeisung ins Stromnetz. Der Gleichspannungszwischenkreis kann seinerseits über einen als Gleichrichter betriebenen Wechselrichter gespeist werden, welcher beispielsweise mit einem Strom erzeugenden Generator, wie im Falle einer Windenergieanlage, verbunden ist.

Umrichter umfassen eine Vielzahl an elektronischen Komponenten, welche beispielsweise zur Ausbildung der Wechselrichter und des Gleichspannungszwischenkreises vorgesehen sind. Beispielsweise werden die Wechselrichter durch den Einsatz von Transistoren, vorzugsweise IGBTs gesteuert. Zur Steuerung der Transistoren können Treiber für die Transistoren, mindestens ein dezentraler Kontroller, ein zentraler Kontroller sowie weitere Kontrollkomponenten zur Steuerung und Überwachung einzelner Komponenten sowie des gesamten Systems vorgesehen sein. Weitere Komponenten sind beispielsweise Kühlkörper, etwa für die Transistoren.

Problematisch ist hierbei, dass die Komponenten des Umrichtersystems aufeinander abgestimmt sein müssen, um eine zuverlässige Funktion zu gewährleisten. Auch ist die Wartung und/oder Reparatur von Umrichtersystemen aufgrund der erforderlichen Abstimmung der Komponenten aufwändig und fehleranfällig. Ein Austauschen oder Modifizieren einzelner Komponenten erfordert beispielsweise eine Abstimmung mit den weiteren Komponenten des Systems. Werden nicht abgestimmte Komponenten miteinander zusammengestellt, kann dies zu einem Ausfall des Umrichtersystems führen, beispielsweise wenn ein Kühlkörper nicht für einen entsprechenden Transistor geeignet ist oder ein Treiber den Transistor nicht richtig ansteuert.

Daher ist es üblich, dass etwa zum Austausch oder Reparatur einer einzelnen Komponente das gesamte System außer Betrieb genommen und einem Reparaturdienst übergeben wird, welcher sicherstellen soll, dass die Zusammenstellung der Komponenten aufeinander abgestimmt ist. Weiter ist die Identifikation und Verwaltung der Komponenten bei einer Vielzahl von Systemen eine Herausforderung.

Vor diesem Hintergrund hat sich die vorliegende Erfindung die Aufgabe gestellt, ein Verfahren zur Herstellung einer Zusammenstellung von Komponenten für ein Umrichtersystem anzugeben, welches den Aufbau, die Wartung und/oder Reparatur von Umrichtersystemen erleichtert und zuverlässiger gestaltet. Ebenfalls soll zur Lösung der Aufgabe eine Komponente für ein Umrichtersystem sowie eine Vorrichtung und ein System zur Durchführung des Verfahrens angegeben werden.

Gemäß einem ersten Aspekt der Erfindung wird die genannte Aufgabe bezüglich eines Verfahrens gelöst, das Verfahren umfassend: Bereitstellen von mindestens zwei Komponenten für ein Umrichtersystem, wobei jede der mindestens zwei Komponenten mindestens ein Trägerelement aufweist; Abgleich einer Zertifizierung der mindestens zwei Komponenten anhand der Trägerelemente; und Erlauben des Verbindens der mindestens zwei Komponenten nur dann, wenn die jeweiligen Trägerelemente für einander zertifiziert sind.

Unter einer Komponente für ein Umrichtersystem wird insbesondere eine Komponente verstanden, welche ein Bauelement eines Umrichtersystems darstellt und in ein Umrichtersystem eingebaut und/oder ausgebaut werden kann. Ein Umrichtersystem kann hierbei ein Umrichtersystem für eine Stromerzeugungsanlage sein, beispielsweise zur regenerativen Stromerzeugung wie etwa ein Umrichtersystem einer Windenergieanlage, einer Photovoltaikanlage, eines Wasserspeicherkraftwerks und/oder Blockheizkraftwerks. Eine Komponente umfasst insbesondere mindestens ein elektronisches Bauelement und kann beispielsweise mindestens ein Verbindungsmittel aufweisen, welches dafür eingerichtet ist, das mindestens eine elektronische Bauelement mit weiteren Komponenten zu verbinden, beispielsweise über eine elektrisch leitende Verbindung. Eine Komponente kann auch als Kühlkörper ausgestaltet sein, beispielsweise für einen Transistor, einen Treiber, einen dezentralen und/oder zentralen Kontroller.

Mindestens zwei Komponenten werden bereitgestellt, wobei die Komponenten nicht zwingend ein vollständiges Umrichtersystem bilden müssen bzw. ein vollständiges Umrichtersystem nicht zwingend zur Durchführung des Verfahrens sein muss. Das Verfahren kann auch die Herstellung einer Zusammenstellung von Komponenten eines Teils eines Umrichtersystems betreffen.

Beispielsweise werden mindestens zwei Komponenten miteinander kombiniert. Das Kombinieren der mindestens zwei Komponenten umfasst beispielsweise die Handlung und/oder den Versuch eines Einbaus mindestens einer der Komponenten etwa in ein bestehendes System, eines Austauschs mindestens einer der Komponenten, einer Reparatur mindestens einer der Komponenten und/oder einer Modifikation mindestens einer der Komponenten. Das Kombinieren der mindestens zwei Komponenten kann von mindestens einem Menschen und/oder mindestens einer Vorrichtung durchgeführt werden.

Die Komponente weist mindestens ein Trägerelement auf. Das Trägerelement wird für einen Abgleich einer Zertifizierung der Komponente mit einer weiteren Komponente herangezogen. Beispielsweise werden eine erste Komponente aufweisend ein erstes Trägerelement und eine zweite Komponente aufweisend ein zweites Trägerelement bereitgestellt und anhand der Trägerelemente nach einem Schlüssel-Schloss-Prinzip abgeglichen. Das erste Trägerelement repräsentiert beispielsweise einen Schlüssel und das zweite Trägerelement ein Schloss, wobei Schlüssel und Schloss durch Hardware (mechanisch bzw. geometrisch) und/oder Software bzw. Daten repräsentiert sein können. Die Trägerelemente können so ausgestaltet sein, dass nur bestimmte Schlüssel in ein Schloss "passen", d.h. nur bestimmte Trägerelemente für einander zertifiziert sind.

Das Trägerelement ist beispielsweise derart ausgestaltet, dass eine der Komponente zugeordnete Information betreffend die Zertifizierung bereitgestellt wird.

Der Abgleich der Zertifizierung kann beispielsweise ein Prüfen umfassen, ob die den Komponenten zugeordneten Informationen einer Vorgabe aus der Zertifizierung entspricht, wobei das Prüfen von mindestens einer Vorrichtung durchgeführt werden kann, beispielsweise von einer der mindestens zwei Komponenten oder einer weiteren Vorrichtung.

Beispielsweise ist die zugeordnete Information indikativ für eine Art der Komponente, für einen Hersteller der Komponente, für die individuelle Komponente und/oder für eine der Komponente zugeordnete Einsatzart. Die Zertifizierung kann Vorgaben enthalten, nach denen beispielsweise die Arten der mindestens zwei kombinierten Komponenten, die Hersteller der Komponente, die individuellen Komponente und/oder eine der jeweiligen Komponente zugeordnete Einsatzart miteinander verglichen werden.

Eine Vorgabe der Zertifizierung kann beispielsweise umfassen, dass zumindest Teile der zugeordneten Information gleich sind, ungleich sind, einer gleichen Gruppe und/oder ungleichen Gruppe zuzuordnen sind. Ein Beispiel für eine Vorgabe kann sein, dass die Komponenten zumindest einem gleichen Hersteller zuzuordnen sind. Ein weiteres Beispiel für eine Vorgabe kann sein, dass nur vorbestimmte individuelle Komponenten und/oder Komponenten aus einer gleichen Baureihe füreinander zertifiziert sind. Eine Vorgabe kann auch sein, dass nur Komponenten mit der gleichen zugeordneten Einsatzart füreinander zertifiziert sind, beispielsweise nur Komponenten geeignet für die gleichen Frequenzbereiche, Leistungsbereiche, Strombereiche und/oder Spannungsbereiche eines Umrichtersystems.

Das Trägerelement ist beispielsweise alternativ oder kumulativ geometrisch, mechanisch, bezüglich der Materialauswahl und/oder anderweitig räumlich bzw. strukturell derart ausgestaltet, ein Verbinden der Komponente mit einer weiteren Komponente nur dann zu erlauben, wenn das mindestens eine Trägerelement und ein Trägerelement der weiteren Komponente für einander zertifiziert sind. Beispielsweise stehen die Trägerelemente mindestens zweier Komponenten miteinander räumlich in Kontakt, wobei die räumliche Ausgestaltung der Trägerelemente z.B. nach einem Schlüssel-Schloss-Prinzip nur für bestimmte Kombinationen von Komponenten eine Verbindung erlaubt.

Unter einer Verbindung wird insbesondere ein operatives Verbinden verstanden, z.B. dass die mindestens zwei Komponenten und/oder ein System umfassend die mindestens zwei Komponenten in einen Zustand überführt werden, welcher einen Betrieb des Systems unter Verwendung der mindestens zwei Komponenten erlaubt. Das Verbinden wird insbesondere zumindest teilweise von einer Vorrichtung durchgeführt. Ein Verbinden kann hierbei auch das Bereitstellen einer elektrischen Leitung bzw. das Schließen mindestens eines elektrischen Kontakts zwischen elektronischen Bauteilen der Komponenten umfassen. Ebenso kann das Verbinden die Ermöglichung einer Ansteuerung und/oder die Aufnahme des Betriebs, beispielsweise durch eine Komponente wie einen Kontroller umfassen und z.B. zumindest teilweise durch Software gesteuert werden. Es kann vorgesehen sein, dass bei einem Bereitstellen von Komponenten, deren Trägerelemente nicht für einander zertifiziert sind, ein Verbinden dieser Komponenten und/oder weiterer Komponenten unterbleibt und die Komponenten in einen Zustand überführt werden und/oder in einem Zustand verbleiben, welcher einen Betrieb des Systems unter Verwendung der mindestens zwei Komponenten nicht ermöglicht.

Mit dem Abgleich der Zertifizierung kann sichergestellt werden, dass nur aufeinander abgestimmte Komponenten miteinander verbunden werden und somit die Fehleranfälligkeit vom Aufbau, der Wartung und/oder der Reparatur von Umrichtersystemen bzw. Teilen von Umrichtersystemen verringert wird. Beispielsweise kann erreicht werden, dass für einen Transistor nur der entsprechende Kühlkörper oder ein geeigneter Treiber zugeordnet wird. Ein Austauschen oder Modifizieren einzelner Komponenten kann dann beispielsweise auch ohne einen Reparaturdienst bzw. speziell geschultes Personal durchgeführt werden, da eine fehlerhafte Abstimmung der Komponenten unterbunden wird. Somit entfällt auch in vielen Fällen die Notwendigkeit, das gesamte System stillzulegen und auszubauen, da der Benutzer der Anlage zumindest Teile einer Instandsetzung selbst durchführen kann.

In einer Ausgestaltung des Verfahrens gemäß dem ersten Aspekt weist das mindestens eine Trägerelement ein Übertragungsmittel auf, wobei das Übertragungsmittel eine der Komponente zugeordnete Information zum Abgleich der Zertifizierung bereitstellt. Ein Übertragungsmittel kann hierbei aktiv und/oder passiv sein. Beispielsweise ermöglicht das Übertragungsmittel ein Übermitteln, Auslesen und/oder Aussenden der zugeordneten Information etwa durch eine Vorrichtung, beispielsweise durch ein weiteres Übertragungsmittel, wobei insbesondere ein drahtloses und/oder drahtgebunden Übermitteln durchgeführt werden kann. Vorzugsweise handelt es sich bei dem Übertragungsmittel um ein *Radio Frequency Identification* (RFID)- und/oder *Near Field Communication* (NFC)-Übertragungsmittel, welches auf einfache Weise ein drahtloses und/oder automatisches Bereitstellen der zugeordneten Information ermöglicht. Ein RFID- und/oder NFC-Übertragungsmittel hat zudem den Vorteil, dass durch eine Begrenzung der Reichweite des Übertragungsmittels erreicht werden kann, dass beispielsweise nur räumlich nah zueinander positionierte Komponenten über die Übertragungsmittel kommunizieren, beispielweise nur räumlich benachbarte Komponenten.

In einer nächsten Ausgestaltung umfasst das Verfahren gemäß dem ersten Aspekt weiter: Bereitstellen einer Identifikation durch mindestens ein Trägerelement. Die Identifikation kann insbesondere indikativ für eine Art der Komponente, für einen Hersteller der Komponente, für die individuelle Komponente und/oder für eine der Komponente zugeordnete Einsatzart sein. Insbesondere wird eine der Komponente zugeordnete Information zum Abgleich der Zertifizierung bereitgestellt, wobei die zugeordnete Information die Identifikation umfasst. Unter der Art der Komponente wird beispielsweise eine Information hinsichtlich der Art und/oder Anzahl der elektronischen Bauelemente der Komponente und/oder hinsichtlich einer Baureihe der Komponente verstanden. Unter dem Hersteller der Komponente kann eine Information hinsichtlich des ursprünglichen Herstellers der Komponente und/oder einzelner Elemente der Komponente sowie auch einem Ausführenden einer Wartung, Reparatur sein. Unter indikativ für die individuelle Komponente wird insbesondere verstanden, dass eine eindeutige Identifikation der Komponente ermöglicht wird, beispielsweise anhand einer Seriennummer. Unter einer der Komponente zugeordneten Einsatzart wird beispielsweise ein möglicher Betriebsmodus und/oder eine mögliche Einsatzumgebung verstanden. Insbesondere wird der Abgleich der Zertifizierung anhand mindestens einer Identifikation durchgeführt.

In einer nächsten Ausgestaltung umfasst das Verfahren weiter: Erhalten der von dem mindestens einen Trägerelement bereitgestellten Identifikation durch einen zentralen Kontroller und/oder durch einen Host und Hinterlegen der Identifikation insbesondere durch den zentralen Kontroller und/oder den Host. Somit kann die Identifikation und Verwaltung von Komponenten, insbesondere bei einer Vielzahl von Komponenten bzw. Umrichtersystemen erleichtert werden, da über einen Zugriff auf die hinterlegten Identifikationen einzelne Komponenten und/oder Gruppen von Komponenten identifiziert und/oder lokalisiert werden können. Eine Hinterlegung der Identifikationen kann auch verwendet werden, um eine Kommunikation zu Komponenten aufzubauen. Eine Identifikation kann beispielsweise auch indikativ für einen Betriebsstatus einer Komponente sein, beispielsweise indikativ dafür, ob die Komponente in Betrieb bzw. aktiviert, deaktiviert und/oder fehlerbehaftet ist. Entsprechend kann beispielweise über eine Hinterlegung der Identifikation eine Fehlfunktion und Reparaturbedürftigkeit festgestellt und/oder lokalisiert werden.

Unter einem zentralen Kontroller wird beispielsweise eine Datenverarbeitungsanlage verstanden, welche die Komponenten mehrerer Umrichtersysteme zentral verwaltet, beispielsweise der Umrichtersystems eines Windenergieparks. Unter einem Host wird beispielsweise eine übergeordnete Datenverarbeitungsanlage verstanden, welche mehrere Umrichtersysteme verwaltet, beispielsweise eine Datenverarbeitungsanlage eingerichtet für *Enterprise Ressource Planning* (ERP), für *Product Lifetime Management* (PLM) und/oder als *Systems Management Server* (SMS).

In einer nächsten Ausgestaltung umfasst das Verfahren gemäß dem ersten Aspekt weiter: Ermittlung einer Lebensdauer mindestens einer Komponente insbesondere anhand der Identifikation. Beispielsweise wird einer Komponente bei der Zertifizierung und/oder Verbindung, z.B. wenn eine neue Komponente in ein System eingebaut wird, eine Lebensdauer zugewiesen. Die Lebensdauer wird beispielsweise zumindest teilweise abhängig von der Identifikation, insbesondere abhängig von der Art der Komponente ermittelt. Beispielsweise ist einer bestimmten Art von Komponente eine vorgegebene Lebensdauer zugewiesen, welche etwa einer durchschnittlichen Lebensdauer oder einer minimalen Lebensdauer der Komponente entspricht und, wobei die vorgegebene Lebensdauer insbesondere über eine Datenbank bereitgestellt wird. Über die Ermittlung der Lebensdauer kann beispielsweise die verbleibende Restzeit der Lebensdauer für eine Mehrzahl von Komponenten verwaltet bzw. berechnet werden, so dass Komponenten beispielsweise vor dem Ablauf der Lebensdauer ausgetauscht werden können.

Beispielsweise wird auch die tatsächliche Lebensdauer von Komponenten erfasst und zur Modellierung der Zuverlässigkeit von Komponenten verwendet.

In einer weiteren Ausgestaltung umfasst das Verfahren weiter: Authentifizierung eines Nutzers, wobei nach erfolgter Authentifizierung dem Nutzer Zugriff auf die zugeordneten Informationen mindestens eines Übertragungsmittels gewährt wird. Ein Nutzer kann sich beispielsweise über ein Authentifizierungsmittel an einer Komponente, insbesondere einem dezentralen Kontroller, zentralen Kontroller und/oder einem Host authentifizieren, um Zugriff auf die Informationen mindestens eines Übertragungsmittels zu erlangen. Beispielsweise kann ein Nutzer zugeordnete Informationen einzelner Komponenten auslesen. Ebenso kann der Nutzer Zugriff auf zugeordnete Informationen eines Systems von Komponenten erhalten. Die Authentifizierung kann beispielsweise über NFC- und/oder RFID-Technologie durchgeführt werden.

In einer nächsten Ausgestaltung umfasst das Verfahrens gemäß dem ersten Aspekt weiter: Zuordnung jeweils einer Rangfolge zu den mindestens zwei Komponenten, wobei das Abgleichen der Zertifizierung der mindestens zwei Komponenten zumindest teilweise abhängig von der zugeordneten Rangfolge durchgeführt wird. Unter einer Rangfolge wird beispielsweise eine Hierarchie verstanden werden, welche für die Zertifizierung herangezogen wird. Beispielsweise wird eine Zertifizierung nur in Richtung einer höheren, niedrigeren und/oder gleichen Rangfolge durchgeführt. Beispielsweise wird eine Rangfolge in aufsteigender Reihenfolge Komponenten mit einem Transistor (z.B. einem IGBT), einem Treiber, einem dezentralen Kontroller und einem zentralen Kontroller zugeordnet. Der Abgleich der Zertifizierung wird hierbei insbesondere in Richtung einer Komponente mit höherer Rangfolge und/oder von einer Komponente mit höherer Rangfolge durchgeführt, beispielsweise kann eine Komponente mit dezentralem Kontroller eine Zertifizierung mit einer Komponente mit einem Treiber durchführen, welche wiederum den Abgleich der Zertifizierung mit einer Komponente mit einem Transistor durchführen kann. Einzelne Rangfolge bzw. Hierarchieebenen können auch übersprungen werden, beispielsweise wird über eine Komponente mit einem zentralen Kontroller eine Zertifizierung von Komponenten mit Treibern abgeglichen. Entsprechend kann bei einem Aufbau eines Systems der Abgleich der Zertifizierung systematisch entlang der Rangfolge durchgeführt werden. Beispielsweise sind auch Trägerelemente repräsentativ für Schlüssel und Schloss entsprechend der Rangfolge vorgesehen, insbesondere repräsentiert das Trägerelement mit der niedrigeren Rangfolge ein Schlüssel und das mit der höheren Rangfolge ein Schloss oder umgekehrt.

Es ist denkbar, dass ein Abgleich einer Zertifizierung und/oder eine Identifikation der Komponenten zeitabhängig durchgeführt wird, beispielsweise in regelmäßigen Zeitabständen. Gemäß einer weiteren Ausgestaltung umfasst das Verfahren weiter: Auslösen der Durchführung des Verfahrens abhängig von einem Betriebsstatus mindestens einer Komponente. Der Betriebsstatus kann beispielsweise indikativ beispielsweise indikativ dafür sein, ob die Komponente in Betrieb, deaktiviert und/oder fehlerbehaftet ist. Beispielsweise wird ein Abgleich einer Zertifizierung und/oder eine Identifikation mindestens einer Komponente von einem Stillstand, einem Auswechseln, Reparieren und/oder Warten mindestens einer Komponente und/oder des Systems durchgeführt. Auch kann eine Serienprüfung zu einem Auslösen des Verfahrens führen. Folglich wird der Betrieb des Systems nicht unterbrochen und es kann sichergestellt werden, dass neu installierte Komponenten zertifiziert und/oder identifiziert werden.

In einer weiteren Ausgestaltung des Verfahrens erfolgt der Abgleich der Zertifizierung der mindestens zwei Komponenten anhand der Trägerelemente unter Einbezug einer Prüfsumme. Dies ist insbesondere in Kombination mit der zuvor beschriebene Zuordnung einer Rangfolge vorteilhaft. Über die Prüfsumme kann sichergestellt werden, dass beispielsweise keine Manipulationen an einer Reihe von Abgleichen von Zertifizierungen durchgeführt werden.

Gemäß einem zweiten Aspekt der Erfindung wird die oben genannte Aufgabe in Bezug auf eine Komponente für ein Umrichtersystem, insbesondere für ein Umrichtersystem für Stromerzeugungsanlagen, dadurch gelöst, dass das mindestens eine Trägerelement dafür eingerichtet ist, ein Verbinden der Komponente mit einer weiteren Komponente über das mindestens eine Verbindungsmittel nur dann zu erlauben, wenn das mindestens eine Trägerelement und ein Trägerelement der weiteren Komponente für einander zertifiziert sind.

Insbesondere ist die Komponente gemäß dem zweiten Aspekt dafür geeignet, zusammen mindestens einer zweiten Komponente insbesondere ebenfalls gemäß dem zweiten Aspekt in einem Verfahren gemäß dem ersten Aspekt verwendet zu werden und/oder zusammen ein Verfahren gemäß dem ersten Aspekt durchzuführen. Die Komponente gemäß dem zweiten Aspekt kann auch dafür eingerichtet sein, ein Verfahren gemäß dem ersten Aspekt auszulösen.

Wie bereits zum Verfahren gemäß dem ersten Aspekt ausgeführt, kann mit der Eignung zum Abgleich der Zertifizierung sichergestellt werden, dass die Komponente nur mit einer oder mehreren aufeinander abgestimmten Komponenten operativ verbunden wird und Fehler beim Aufbau, der Wartung und/oder der Reparatur von Systemen aus den Komponenten vermieden werden.

In einer Ausgestaltung der Komponente gemäß dem zweiten Aspekt ist das mindestens eine Trägerelement geometrisch derart ausgestaltet, ein Verbinden der Komponente mit einer weiteren Komponente über das mindestens eine Verbindungsmittel nur dann zu erlauben, wenn das mindestens eine Trägerelement und ein Trägerelement der weiteren Komponente für einander zertifiziert sind. Unter der geometrischen Ausgestaltung kann auch eine mechanische Ausgestaltung, eine Materialauswahl und/oder anderweitige räumliche bzw. strukturelle Ausgestaltung gemeint sein. Beispielsweise ist das Trägerelement dafür eingerichtet, mit dem Trägerelement mindestens einer weiteren Komponenten miteinander in räumlichen Kontakt gebracht zu werden, wobei die räumliche Ausgestaltung der Trägerelemente z.B. nach einem Schlüssel-Schloss-Prinzip nur für bestimmte Kombinationen von Komponenten eine Verbindung erlaubt.

In einer nächsten Ausgestaltung der Komponente gemäß dem zweiten Aspekt weist das mindestens eine Trägerelement ein Übertragungsmittel auf, insbesondere ein RFID- und/oder NFC-Übertragungsmittel, insbesondere zur Bereitstellung einer der Komponente zugeordneten Information zum Abgleich der Zertifizierung. Beispielsweise ermöglicht das Übertragungsmittel ein Übermitteln, Auslesen und/oder Aussenden der zugeordneten Information an und/oder durch eine Vorrichtung, beispielsweise an und/oder durch ein weiteres Übertragungsmittel, wobei insbesondere ein drahtloses und/oder drahtgebunden Übermitteln durchgeführt werden kann.

Eine nächste Ausgestaltung erfährt die Komponente gemäß dem zweiten Aspekt dadurch, dass das Trägerelement Mittel zur Bereitstellung einer Identifikation umfasst, wobei die Identifikation insbesondere indikativ für Art der Komponente, für mindestens einen Hersteller der Komponente, für die individuelle Komponente und/oder für eine der Komponente zugeordnete Einsatzart ist. Entsprechende Informationen können zum Abgleich der Zertifizierung herangezogen werden. Ebenfalls kann eine Identifikation hinterlegt werden.

In einer Ausgestaltung der Komponente gemäß dem zweiten Aspekt ist mindestens ein elektronisches Bauteil vorgesehen, insbesondere mindestens ein IGBT, ein dezentraler Kontroller, ein zentraler Kontroller und/oder ein Treiber. Alternativ kann die Komponente auch als Kühlkörper, beispielsweise für einen Transistor, einen Treiber und/oder zentralen/dezentralen Kontroller ausgestaltet sein. Die entsprechenden Bauteile können für Umrichtersysteme verwendet werden.

Gemäß einer weiteren Ausgestaltung ist der Komponente nach dem zweiten Aspekt über das mindestens eine Trägerelement eine Rangfolge zugeordnet, wobei das mindestens eine Trägerelement dafür eingerichtet ist, ein Verbinden der Komponente mit einer weiteren Komponente über das mindestens eine Verbindungsmittel zumindest teilweise abhängig von der zugeordneten Rangfolge zu erlauben. Mit einer Rangfolge wird beispielsweise eine Hierarchie unter Komponenten angegeben, welche für die Zertifizierung herangezogen wird. Die Komponente kann entsprechend bei einem Aufbau eines Systems systematisch innerhalb der Rangfolge im Hinblick auf die Zertifizierung abgeglichen werden.

In einer weiteren Ausgestaltung der Komponente gemäß dem zweiten Aspekt ist ein Sicherungselement zur Sicherung des Trägerelements gegen Manipulationen vorgesehen. Um eine Zuverlässigkeit und Echtheit der Zertifizierung zu gewährleisten, kann ein Sicherungselement vorgesehen sein, welches beispielsweise bei einer Manipulation des Trägerelements zwingend zerstört oder insoweit verändert wird, dass die Manipulation offensichtlich wird. Folglich kann das Trägerelement nicht ohne weiteres gegen ein anderes Trägerelement ausgetauscht werden oder eine Manipulation eines Übertragungsmittels stattfinden. Beispielsweise deckt das Sicherungselement das Trägerelement und/oder ein Übertragungsmittel ab und muss zumindest teilweise für eine Manipulation entfernt werden, z.B. nach Art eines Siegels.

Gemäß einem dritten Aspekt wird die oben genannte Aufgabe auch bezüglich einer Vorrichtung gelöst, welche dazu eingerichtet ist oder entsprechende Mittel umfasst, ein Verfahren gemäß dem ersten Aspekt durchzuführen und/oder zu steuern. Eine solche Vorrichtung ist oder umfasst beispielsweise eine Komponente gemäß dem zweiten Aspekt.

Gemäß dem dritten Aspekt der Erfindung wird auch eine Vorrichtung beschrieben, umfassend zumindest einen Prozessor und zumindest einen Speicher mit Computerprogrammcode, wobei der zumindest eine Speicher und der Computerprogrammcode dazu eingerichtet sind, mit dem zumindest einen Prozessor zumindest ein Verfahren gemäß dem ersten Aspekt auszuführen und/oder zu steuern. Unter einem Prozessor soll zum Beispiel eine Kontrolleinheit, ein Mikroprozessor, eine Mikrokontrolleinheit wie ein Mikrocontroller, ein digitaler Signalprozessor (DSP), eine anwendungsspezifische Integrierte Schaltung (ASIC) oder ein Field Programmable Gate Arrays (FPGA) verstanden werden.

Zum Beispiel umfasst eine beispielhafte Vorrichtung ferner Mittel zum Speichern von Informationen wie einen Programmspeicher und/oder einen Hauptspeicher. Zum Beispiel umfasst eine beispielhafte erfindungsgemäße Vorrichtung ferner jeweils Mittel zum Empfangen und/oder Senden von Informationen über ein Netzwerk wie eine Netzwerkschnittstelle. Zum Beispiel sind beispielhafte erfindungsgemäße Vorrichtungen über ein oder mehrere Netzwerke miteinander verbunden und/oder verbindbar. Beispiele für ein Netzwerk sind ein lokales Netzwerk (LAN), ein großräumiges Netzwerk (WAN), ein drahtloses Netzwerk (beispielsweise gemäß dem IEEE-802.11-Standard, dem Bluetooth (LE)-Standard und/oder dem NFC-Standard), ein drahtgebundenes Netzwerk, ein Mobilfunknetzwerk, ein Telefonnetzwerk und/oder das Internet. Eine Kommunikation mit einem externen Computer kann durchgeführt werden, beispielsweise über eine Internetverbindung.

Eine beispielhafte Vorrichtung gemäß dem dritten Aspekt ist oder umfasst etwa eine Datenverarbeitungsanlage, die softwaremäßig und/oder hardwaremäßig eingerichtet ist, um die jeweiligen Schritte eines beispielhaften Verfahrens gemäß dem ersten Aspekt ausführen zu können. Beispiele für eine Datenverarbeitungsanlage sind ein Computer, ein Desktop-Computer, ein Server, ein Thinclient und/oder ein tragbarer Computer (Mobilgerät), wie etwa ein Laptop-Computer, ein Tablet-Computer, ein Wearable, ein persönlicher digitaler Assistent oder ein Smartphone.

Das heißt insbesondere, dass einzelne Verfahrensschritte des Verfahrens gemäß dem ersten Aspekt (beispielsweise das Abgleichen der Zertifizierung und/oder die Identifikation einer Komponente) hierbei von einer oder mehrerer Vorrichtungen gemäß dem dritten Aspekt durchgeführt werden können. Eine solche Vorrichtung kann beispielswiese ein Server sein und beispielsweise ein Teil bzw. eine Komponente einer sogenannten Computer Cloud sein, welche Datenverarbeitungsressourcen dynamisch für verschiedene Nutzer in einem Kommunikationssystem bereitstellt. Unter einer Computer Cloud wird insbesondere eine Datenverarbeitungs-Infrastruktur gemäß der Definition des "National Institute for Standards and Technology" (NIST) für den englischen Begriff "Cloud Computing" verstanden. Ein Beispiel einer Computer Cloud ist eine Microsoft Windows Azure Platform.

Gemäß dem dritten Aspekt der Erfindung wird auch ein Computerprogramm beschrieben, das Programmanweisungen umfasst, die einen Prozessor zur Ausführung und/oder Steuerung eines Verfahrens gemäß dem ersten Aspekt veranlassen, wenn das Computerprogramm auf dem Prozessor läuft. Ein beispielhaftes Programm gemäß der Erfindung kann in oder auf einem computerlesbaren Speichermedium gespeichert sein, welches eines oder mehrere Programme enthält.

Gemäß dem dritten Aspekt der Erfindung wird auch ein computerlesbares Speichermedium beschrieben, welches ein Computerprogramm gemäß dem dritten Aspekt enthält. Ein computerlesbares Speichermedium kann z.B. als magnetisches, elektrisches, elektro-magnetisches, optisches und/oder andersartiges Speichermedium ausgebildet sein. Ein solches computerlesbares Speichermedium ist vorzugsweise gegenständlich (also "berührbar"), zum Beispiel ist es als Datenträgervorrichtung ausgebildet. Eine solche Datenträgervorrichtung ist beispielsweise tragbar oder in einer Vorrichtung fest installiert. Beispiele für eine solche Datenträgervorrichtung sind flüchtige oder nicht-flüchtige Speicher mit wahlfreiem-Zugriff (RAM) wie z.B. NOR-Flash-Speicher oder mit sequentiellen-Zugriff wie NAND-Flash-Speicher und/oder Speicher mit Nur-Lese-Zugriff (ROM) oder Schreib-Lese-Zugriff. Computerlesbar soll zum Beispiel so verstanden werden, dass das Speichermedium von einem Computer bzw. einer Datenverarbeitungsanlage (aus)gelesen und/oder beschrieben werden kann, beispielsweise von einem Prozessor.

Gemäß dem dritten Aspekt der Erfindung wird auch ein System beschrieben, umfassend mehrere Vorrichtungen, insbesondere umfassend eine Vorrichtung gemäß dem dritten Aspekt und/oder eine Komponente gemäß dem zweiten Aspekt, welche zusammen ein Verfahren gemäß dem ersten Aspekt durchführen.

Die zuvor in dieser Beschreibung beschriebenen beispielhaften Ausgestaltungen der vorliegenden Erfindung sollen auch in allen Kombinationen miteinander offenbart verstanden werden. Insbesondere sollen beispielhafte Ausgestaltungen in Bezug auf die unterschiedlichen Aspekte offenbart verstanden werden. Insbesondere sollen durch die vorherige oder folgende Beschreibung von Verfahrensschritten gemäß bevorzugter Ausführungsformen eines Verfahrens auch entsprechende Mittel zur Durchführung der Verfahrensschritte durch bevorzugte Ausführungsformen einer Vorrichtung offenbart sein. Ebenfalls soll durch die Offenbarung von Mitteln einer Vorrichtung zur Durchführung eines Verfahrensschrittes auch der entsprechende Verfahrensschritt offenbart sein.

Weitere Ausgestaltungen und Vorteile der Erfindung sind in der folgenden detaillierten Beschreibung einiger beispielhafter Ausführungsformen der vorliegenden Erfindung, insbesondere in Verbindung mit der Zeichnung, zu entnehmen. Die Zeichnung zeigt in
- Fig. 1: ein schematisches Diagramm eines Ausführungsbeispiels eines Verfahrens gemäß dem ersten Aspekt,
- Fig. 2: eine schematische Darstellung eines Systems mit einer Komponente gemäß dem zweiten Aspekt und eines weiteren Ausführungsbeispiels des Verfahrens gemäß dem ersten Aspekt,
- Fig. 3: eine schematische Darstellung eines weiteren Systems und eines weiteren Ausführungsbeispiels des Verfahrens gemäß dem ersten Aspekt,
- Fig. 4: ein Blockdiagramm eines Ausführungsbeispiels einer Vorrichtung und
- Fig. 5: unterschiedliche Ausführungsbeispiele eines Speichermediums.

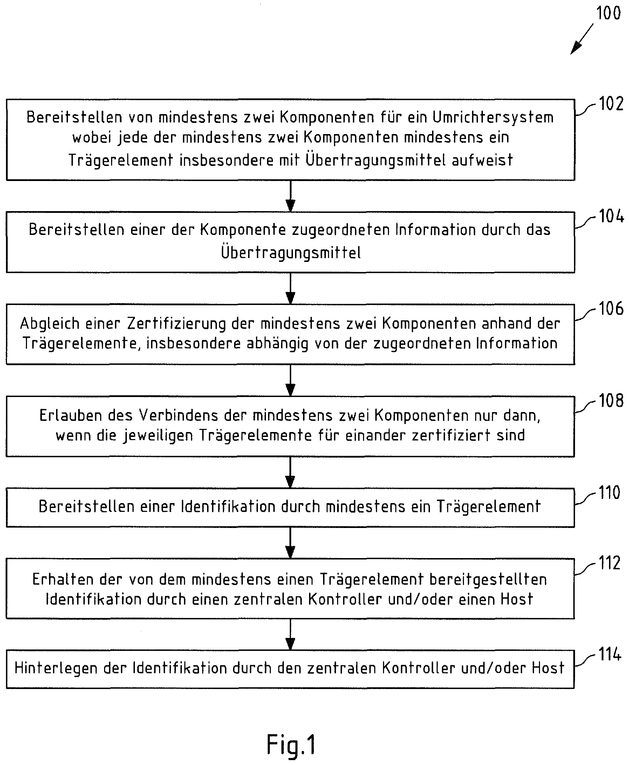

In Fig. 1 ist ein schematisches Diagramm eines Ausführungsbeispiels eines Verfahrens 100 gemäß dem ersten Aspekt gezeigt.

In Aktion 102 werden mindestens zwei Komponenten für ein Umrichtersystem bereitgestellt. Die Komponenten weisen beispielsweise Transistoren wie IGBTs, Treiber, dezentrale und/oder zentrale Kontroller als elektronische Bauteile auf. Jede der mindestens zwei Komponenten weist mindestens ein Trägerelement auf.

Das Trägerelement weist in einer Ausführungsform ein Übertragungsmittel auf, z.B. ein RFID- und/oder NFC-Übertragungsmittel, welches eine der Komponente zugeordnete Information zum Abgleich einer Zertifizierung in Aktion 104 bereitstellt.

In Aktion 106 erfolgt ein Abgleich einer Zertifizierung der mindestens zwei Komponenten anhand der Trägerelemente. Der Abgleich der Zertifizierung kann beispielsweise ein Prüfen umfassen, ob die den Komponenten zugeordneten Informationen einer Vorgabe aus der Zertifizierung entspricht. Ein Beispiel für eine Vorgabe kann sein, dass die Komponenten füreinander zertifiziert sind, wenn die Komponenten zumindest einem gleichen Hersteller zuzuordnen sind. Ein weiteres Beispiel für eine Vorgabe kann sein, dass nur zwei individuelle Komponenten, Komponenten aus einer gleichen Baureihe und/oder Komponenten einer gleichen Einsatzart füreinander zertifiziert sind. Beispielsweise sind die Trägerelemente nach einem Schlüssel-Schloss-Prinzip ausgestaltet.

Mit Aktion 108 erfolgt ein Erlauben des Verbindens der mindestens zwei Komponenten nur dann, wenn die jeweiligen Trägerelemente für einander zertifiziert sind. Im Zusammenhang mit dem Abgleich der Zertifizierung aus Aktion 106 kann sichergestellt werden, dass nur aufeinander abgestimmte Komponenten miteinander verbunden werden und somit die Fehleranfälligkeit vom Aufbau, der Wartung und/oder der Reparatur von Umrichtersystemen bzw. Teilen von Umrichtersystemen verringert wird.

Optional kann in Aktion 110 ein Bereitstellen einer Identifikation durch mindestens ein Trägerelement erfolgen. Die Identifikation kann indikativ für Art der Komponente, für mindestens einen Hersteller der Komponente, für die individuelle Komponente und/oder für eine der Komponente zugeordneten Einsatzart sein.

Die von dem mindestens einen Trägerelement bereitgestellte Identifikation wird in Aktion 112 durch einen zentralen Kontroller und/oder einen Host erhalten und wird in Aktion 114 hinterlegt, insbesondere ebenfalls durch den zentralen Kontroller und/oder Host. Die Identifikation kann für eine Verwaltung von Komponenten, insbesondere bei einer Vielzahl von Komponenten bzw. Umrichtersystemen herangezogen sowie für den Aufbau einer Kommunikation der Komponenten verwendet werden. Insbesondere wird eine Ermittlung einer Lebensdauer der Komponente anhand der Identifikation durchgeführt.

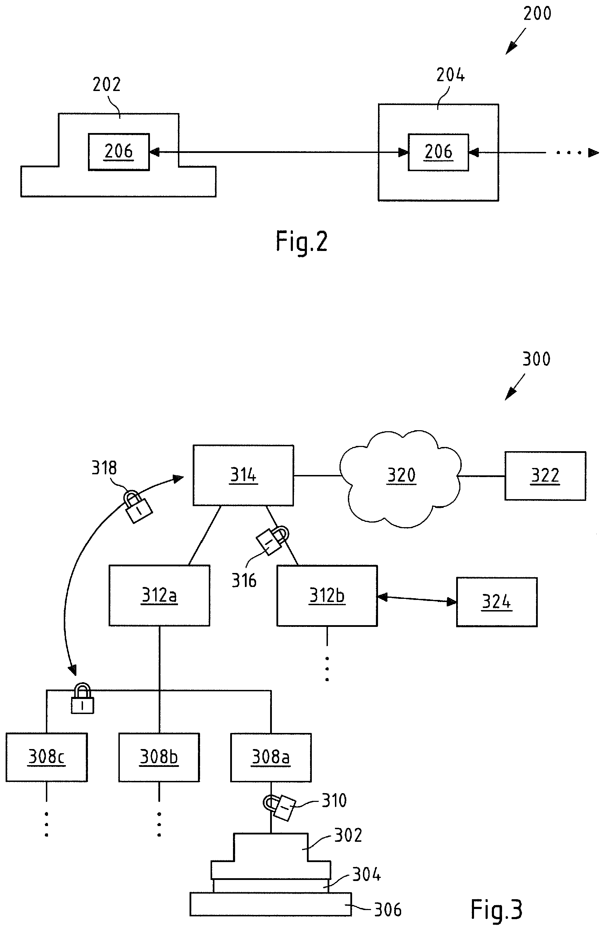

Fig. 2 zeigt eine schematische Darstellung eines Systems 200 mit einer Komponente 202 gemäß dem zweiten Aspekt sowie einer weiteren Komponente 204. Fig. 2 zeigt hierbei auch ein weiteres Ausführungsbeispiel des Verfahrens gemäß dem ersten Aspekt.

In diesem Ausführungsbeispiel umfasst die Komponente 202 einen oder mehrere IGBTs und die Komponente 204 umfasst einen Treiber, welcher zur Steuerung der IGBTs der Komponente 202 eingerichtet ist. Beispielsweise werden die Komponenten 202, 204 in einem Umrichtersystem miteinander kombiniert, etwa wenn das System 200 neu aufgebaut oder einer der Komponenten 202, 204 ausgetauscht wird.

Die Komponente 202 weist ein Trägerelement 206 auf, welches ein RFID- und/oder NFC-Übertragungsmittel aufweist. Das Übertragungsmittel ist dafür eingerichtet, eine der Komponente 202 zugeordnete Information bereitzustellen, welche hier indikativ für die Art der Komponente 202 (z.B. dass die Komponente 202 einen oder mehrere IGBTs umfasst), den Hersteller der Komponente 202 sowie die individuelle Komponente 202 ist (z.B. eine Seriennummer, welche eine eindeutige Identifikation der individuellen Komponente 202 zulässt).

Die Komponente 204 weist ebenfalls ein Trägerelement 208 auf, welches ein RFID- und/oder NFC-Übertragungsmittel aufweist. Die Übertragungsmittel der Trägerelemente 206, 208 sind dafür eingerichtet, miteinander zu kommunizieren. Beispielsweise liest das Übertragungsmittel des Trägerelements 208 die der Komponente 202 zugeordnete Information aus dem Trägerelement 206 aus. Auch das Trägerelement 208 der Komponente 204 stellt zudem eine der der Komponente 204 zugeordnete Information bereit, welche hier indikativ für die Art der Komponente 204 (z.B. dass die Komponente 204 einen Treiber für IGBTs umfasst), den Hersteller der Komponente 204 sowie die individuelle Komponente 204 ist.

Ein Abgleich einer Zertifizierung der zwei Komponenten 202, 204 anhand der Trägerelemente 206, 208 und der jeweiligen zugeordneten Information wird durchgeführt, beispielsweise von einer der beiden Komponenten 202, 204 oder auch von einer weiteren, in Fig. 2 nicht dargestellten Komponente wie einem zentralen oder dezentralen Kontroller. Die Zertifizierung kann eine oder mehrere Vorgaben enthalten. Beispielsweise wird mit dem Abgleich geprüft, ob der Treiber der Komponente 204 für die IGBTs der Komponente 202 ausgestaltet ist. Weiter wird geprüft, ob die Komponenten 202, 204 dem gleichen Hersteller zuzuordnen sind.

Nur wenn die beiden Komponenten 202, 204 über die Trägerelemente 206, 208 füreinander zertifiziert sind, wird ein Verbinden der Komponenten 202, 204 erlaubt. Unter einer Verbindung wird insbesondere ein operatives Verbinden verstanden, z.B. dass die Komponenten 202, 204 in einen Zustand überführt werden, welcher einen Betrieb des Systems 200 unter Verwendung der Komponenten 202, 204 erlaubt. Beispielsweise ist die Komponente 204 so eingerichtet, dass deren Treiber die IGBTs der Komponente 202 nur dann ansteuert, wenn die Trägerelemente 206, 208 füreinander zertifiziert sind. Beispielsweise nimmt ein zentraler oder dezentraler Kontroller eine Ansteuerung der IGBTs durch den Treiber der Komponente 204 nur dann in Betrieb, wenn die Trägerelemente 206, 208 füreinander zertifiziert sind. Damit wird die Fehleranfälligkeit vom Aufbau und der Wartung des Systems 200 reduziert.

Fig. 3 zeigt eine schematische Darstellung eines weiteren Systems 300 und eines weiteren Ausführungsbeispiels des Verfahrens gemäß dem ersten Aspekt.

Eine Komponente 302 umfassend einen IGBT ist vorgesehen. Die Komponente 302 ist mit einer Wärmeleitpaste 304 auf einem Kühlkörper 306 angeordnet. Komponente 302 und Kühlkörper 306 weisen jeweils Trägerelemente auf (nicht gezeigt), welche geometrisch bzw. mechanisch derart ausgestaltet sind, ein Verbinden der Komponente 302 mit dem Kühlkörper nur dann zu erlauben, wenn die Trägerelemente der Komponente 302 und des Kühlkörpers 306 für einander zertifiziert sind. Die jeweiligen Trägerelemente stehen hierbei miteinander in räumlichen Kontakt, wobei die räumliche Ausgestaltung der Trägerelemente nach einem Schlüssel-Schloss-Prinzip nur bestimmte Kombinationen erlaubt. Beispielsweise kann eine Vorgabe der Zertifizierung von Komponente 302 umfassend einen IGBT und des Kühlkörpers 306 sein, dass der Kühlkörper 306 für den IGBT ausgestaltet ist und Komponente 302 und Kühlkörper 306 dem gleichen Hersteller zuzuordnen sind. Andernfalls passt beispielsweise die Komponente 302 aufgrund der geometrischen Ausgestaltung nicht auf den Kühlkörper 306, so dass ein Betrieb der Komponente 302 mit dem Kühlkörper 306 nicht möglich ist.

Mehrere Komponenten 308a, 308b, 308c aufweisend jeweils einen Treiber für IGBTs sind vorgesehen. Die Komponente 308a wird mit der Komponente 302 kombiniert, wobei ein Abgleich der Zertifizierung durchgeführt wird. Die Komponenten 302, 308a weisen hierfür Trägerelemente mit RFID- und/oder NFC-Übertragungsmitteln auf, welche jeweils eine zugeordnete Information bereitstellen. Ein Abgleich einer Zertifizierung der zwei Komponenten 302, 308a wird anhand der Trägerelemente und der jeweiligen zugeordneten Information durchgeführt, wie beispielsweise oben zur Fig. 2 beschrieben. Beispielsweise wird geprüft, ob der Treiber der Komponente 308a für den IGBT der Komponente 302 ausgestaltet ist und dem gleichen Hersteller zuzuordnen ist. Wie über das Schloss 310 symbolisiert wird, wird ein Verbinden der Komponenten 302, 308a nur erlaubt, wenn die beiden Komponenten 302, 308a über die Trägerelemente füreinander zertifiziert sind. Beispielsweise wird bei fehlerhafter Zertifizierung der IGBT nicht angesteuert.

Neben der Komponente 308a sind die Komponenten 308b, 308c ebenfalls mit Komponenten aufweisend IGBTs (nicht gezeigt) kombiniert, welche z.B. zusammen einen Teil eines Umrichtersystems für eine Windenergieanlage bilden. Die Komponenten 308b, 308c können ebenfalls einem Abgleich einer Zertifizierung unterzogen werden.

Eine Komponente 312a aufweisend einen dezentralen Kontroller ist vorgesehen, welcher beispielsweise mit den Treibern der Komponenten 308a, 308b, 308c verbunden ist. Der dezentrale Kontroller steuert und überwacht beispielsweise ein Umrichtersystem für eine Stromerzeugungsanlage wie eine Windenergieanlage.

Eine Komponente 314 weist einen zentralen Kontroller auf, welcher dafür eingerichtet ist, mehrere dezentrale Kontroller zu steuern und zu überwachen und somit beispielsweise für mehrere Stromerzeugungsanlagen zuständig ist. In Fig. 3 ist hierzu eine Kombination der Komponente 314 mit den Komponenten 312a, 312b gezeigt, welche jeweils einen dezentralen Kontroller aufweisen und beispielsweise jeweils einem Umrichtersystem für eine Stromerzeugungsanlage zugeordnet sind.

Zwischen den Komponenten 312a, 312b; 314 kann ebenso ein Abgleich einer Zertifizierung stattfinden, wie durch das Schloss 316 symbolisiert wird. Weiter wird ein Abgleich einer Zertifizierung zwischen der Komponente 308c aufweisend einen Treiber und der Komponente 314 aufweisend den zentralen Kontroller durchgeführt, wie durch das Schloss 318 symbolisiert wird; ein Abgleich muss somit nicht zwingend zwischen benachbarten Komponenten stattfinden. Beispielsweise können die Übertragungsmittel der Trägerelemente der Komponenten 308c, 314 direkt miteinander kommunizieren und/oder eine Übermittlung von zugeordneten Informationen findet mittelbar über das Übertragungsmittel des Trägerelements der Komponente 312a aufweisend den dezentralen Kontroller statt.

Die Komponente 314 steht in Kommunikation mit einem Netzwerk 320, beispielsweise dem Internet. Ein Host 322 ist vorgesehen, welcher beispielsweise für ERP (Enterprise Ressource Planning)-Anwendungen und PLM (Product Lifetime Management)-Anwendungen vorgesehen ist und als SMS (Systems Management Server) ausgestaltet sein kann.

Hierfür ist vorgesehen, dass zumindest ein Teil der Trägerelemente der Komponenten 302; 308a, 308b, 308c; 312a, 312b; 314 dafür eingerichtet ist, eine Identifikation indikativ für die individuelle Komponente 302; 308a, 308b, 308c; 312a, 312b; 314 bereitzustellen. Die Identifikationen werden durch den Host 322 erhalten und hinterlegt. Entsprechend können beispielsweise individuelle Komponenten einfach aufgefunden und ermittelt werden, mit welchen weiteren Komponenten diese kombiniert sind.

Weiter wird vom Host 322 eine Lebensdauer der Komponenten 302; 308a, 308b, 308c; 312a, 312b; 314 anhand der Identifikation ermittelt, so dass ältere Komponenten rechtzeitig ausgetauscht werden können.

Weiter ist den Komponenten 302; 308a, 308b, 308c; 312a, 312b; 314 eine Rangfolge zugeordnet, welche anhand der elektronischen Bauelemente zugeordnet wird. Hierbei wird beispielsweise in aufsteigender Reihenfolge die Rangfolge IGBT - Treiber - dezentraler Kontroller - zentraler Kontroller vergeben. Eine Zertifizierung wird beispielsweise nur in Richtung einer höheren Rangfolge durchgeführt. Der Abgleich der Zertifizierung wird hierbei insbesondere nur von einer Komponente mit höherer Rangfolge durchgeführt, beispielsweise kann eine Komponente 312a mit dezentralem Kontroller eine Zertifizierung einer Komponente 308a, 308b, 308c mit Treiber durchführen, welche wiederum den Abgleich der Zertifizierung für Komponenten mit IGBTs durchführen können. Entsprechend kann bei einem Aufbau eines Systems der Abgleich der Zertifizierung systematisch entlang der Rangfolge durchgeführt werden. Der Abgleich der Zertifizierung erfolgt unter Einbezug einer Prüfsumme, so dass keine Manipulationen an einer Reihe von Abgleichen von Zertifizierungen vorgenommen werden können. Die Trägerelemente sind zudem über Sicherungselemente gesichert.

Weiter kann eine Authentifizierung eines Nutzers durchgeführt werden, wobei beispielsweise eine RFID- und/oder NFC-Karte 324 verwendet wird, um mit einem Übertragungsmittel zu kommunizieren, beispielsweise der Komponente 312b mit dem dezentralen Kontroller. Nach erfolgter Authentifizierung wird dem Nutzer Zugriff auf die zugeordneten Informationen des mindestens eines Übertragungsmittels gewährt, beispielsweise kann der Nutzer die Identifikationen der weiteren Komponenten einsehen, welche mit dem dezentralen Kontroller der Komponente 312b kombiniert sind.

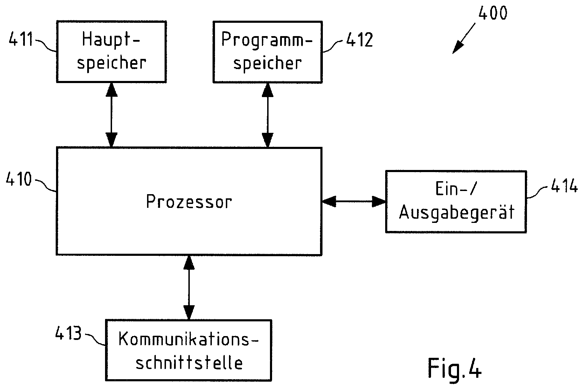

Fig. 4 zeigt ein Blockdiagramm eines Ausführungsbeispiels einer Vorrichtung 400, welche insbesondere ein beispielhaftes Verfahren gemäß dem ersten Aspekt zumindest teilweise ausführen kann. Beispielsweise führt die Vorrichtung zumindest den Abgleich einer Zertifizierung durch. Die Vorrichtung 400 kann insofern beispielsweise ein Computer, ein Desktop-Computer, ein Server, ein Thinclient oder ein tragbarer Computer (Mobilgerät), wie etwa ein Laptop-Computer, ein Tablet-Computer, ein persönlicher digitaler Assistent (PDA) oder ein Smartphone sein. Die Vorrichtung kann beispielsweise die Funktion eines Servers oder eines Clients erfüllen.

Prozessor 410 der Vorrichtung 400 ist insbesondere als Mikroprozessor, Mikrokontrolleinheit, Mikrocontroller, digitaler Signalprozessor (DSP), Anwendungsspezifische Integrierte Schaltung (ASIC) oder Field Programmable Gate Array (FPGA) ausgebildet.

Prozessor 410 führt Programmanweisungen aus, die in Programmspeicher 412 gespeichert sind, und speichert beispielsweise Zwischenergebnisse oder ähnliches in Arbeits- oder Hauptspeicher 411. Zum Beispiel ist Programmspeicher 412 ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Hauptspeicher 411 ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Programmspeicher 412 ist vorzugsweise ein lokaler mit der Vorrichtung 400 fest verbundener Datenträger. Mit der Vorrichtung 400 fest verbundene Datenträger sind beispielsweise Festplatten, die in die Vorrichtung 400 eingebaut sind. Alternativ kann der Datenträger beispielsweise auch ein mit der Vorrichtung 400 trennbar verbindbarer Datenträger sein wie ein Speicher-Stick, ein Wechseldatenträger, eine tragbare Festplatte, eine CD, eine DVD und/oder eine Diskette.

Programmspeicher 412 enthält beispielsweise das Betriebssystem von der Vorrichtung 400, das beim Starten der Vorrichtung 400 zumindest teilweise in Hauptspeicher 411 geladen und vom Prozessor 410 ausgeführt wird. Insbesondere wird beim Starten von Vorrichtung 400 zumindest ein Teil des Kerns des Betriebssystems in den Hauptspeicher 411 geladen und von Prozessor 410 ausgeführt. Das Betriebssystem von Vorrichtung 400 ist beispielsweise ein Windows -, UNIX-, Linux-, Android-, Apple iOS- und/oder MAC-Betriebssystem.

Das Betriebssystem ermöglicht insbesondere die Verwendung der Vorrichtung 400 zur Datenverarbeitung. Es verwaltet beispielsweise Betriebsmittel wie Hauptspeicher 411 und Programmspeicher 412, Netzwerkschnittstelle 413, Ein- und Ausgabegerät 414, stellt unter anderem durch Programmierschnittstellen anderen Programmen grundlegende Funktionen zur Verfügung und steuert die Ausführung von Programmen.

Prozessor 410 steuert die Kommunikationsschnittstelle 413, welche beispielsweise eine Netzwerkschnittstelle sein kann und als Netzwerkkarte, Netzwerkmodul und/oder Modem ausgebildet sein kann. Die Kommunikationsschnittstelle 413 ist insbesondere dazu eingerichtet, eine Verbindung der Vorrichtung 400 mit anderen Vorrichtungen, insbesondere über ein (drahtloses) Kommunikationssystem, beispielsweise ein Netzwerk, herzustellen und mit diesen zu kommunizieren. Die Kommunikationsschnittstelle 413 kann beispielsweise Daten (über das Kommunikationssystem) empfangen und an Prozessor 410 weiterleiten und/oder Daten von Prozessor 410 empfangen und (über das Kommunikationssystem) senden. Beispiele für ein Kommunikationssystem sind ein lokales Netzwerk (LAN), ein großräumiges Netzwerk (WAN), ein drahtloses Netzwerk (beispielsweise gemäß dem IEEE-802.11-Standard, dem Bluetooth (LE)-Standard und/oder dem NFC-Standard), ein drahtgebundenes Netzwerk, ein Mobilfunknetzwerk, ein Telefonnetzwerk und/oder das Internet.

Des Weiteren kann Prozessor 410 zumindest ein Ein-/Ausgabegerät 414 steuern. Ein-/Ausgabegerät 414 ist beispielsweise eine Tastatur, eine Maus, eine Anzeigeeinheit, ein Mikrofon, eine berührungsempfindliche Anzeigeeinheit, ein Lautsprecher, ein Lesegerät, ein Laufwerk und/oder eine Kamera. Ein-/Ausgabegerät 414 kann beispielsweise Eingaben eines Benutzers aufnehmen und an Prozessor 410 weiterleiten und/oder Informationen für den Benutzer von Prozessor 410 empfangen und ausgeben.

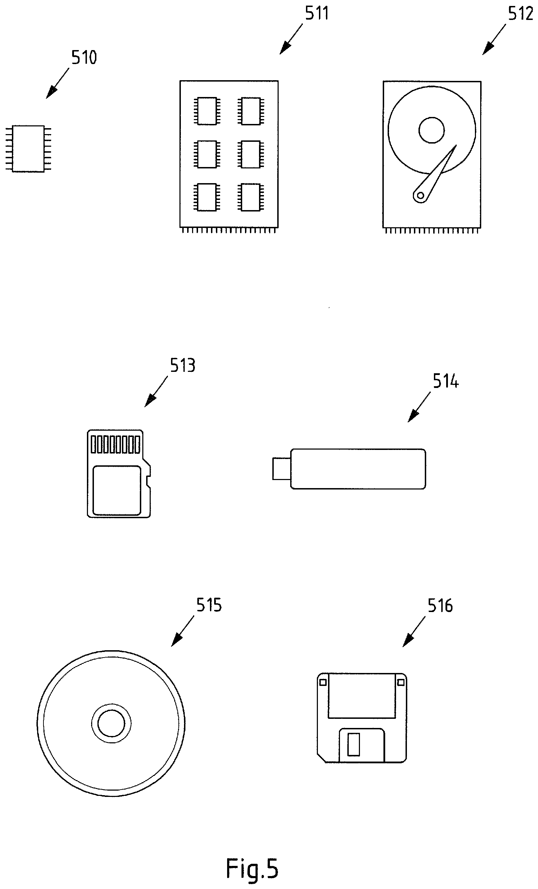

Fig. 5 zeigt schließlich unterschiedliche Ausführungsbeispiele von Speichermedien, auf denen ein Ausführungsbeispiel eines erfindungsgemäßen Computerprogrammes gespeichert sein kann. Das Speichermedium kann beispielsweise ein magnetisches, elektrisches, optisches und/oder andersartiges Speichermedium sein. Das Speichermedium kann beispielsweise Teil eines Prozessors (z.B. des Prozessor 410 der Fig. 4) sein, beispielsweise ein (nicht-flüchtiger oder flüchtiger) Programmspeicher des Prozessors oder ein Teil davon (wie Programmspeicher 412 in Fig. 4). Ausführungsbeispiele eines Speichermediums sind ein Flash-Speicher 510, eine SSD-Festplatte 511, eine magnetische Festplatte 512, eine Speicherkarte 513, ein Memory Stick 514 (z.B. ein USB-Stick), eine CD-ROM oder DVD 515 oder eine Diskette 516.

## Patentansprüche

1. Verfahren zur Herstellung einer Zusammenstellung von Komponenten (202, 204, 302, 306, 308a-c, 312a-b, 314) für ein Umrichtersystem, insbesondere für ein Umrichtersystem für Stromerzeugungsanlagen,
das Verfahren umfassend:
- Bereitstellen (102) von mindestens zwei Komponenten für ein Umrichtersystem,
- wobei jede der mindestens zwei Komponenten mindestens ein Trägerelement (206, 208) aufweist;
- Abgleich (106) einer Zertifizierung der mindestens zwei Komponenten anhand der Trägerelemente; und
- Erlauben (108) des Verbindens der mindestens zwei Komponenten nur dann, wenn die jeweiligen Trägerelemente für einander zertifiziert sind.

2. Verfahren nach Anspruch 1,
wobei das mindestens eine Trägerelement ein Übertragungsmittel aufweist, insbesondere ein RFID- und/oder NFC-Übertragungsmittel, wobei das Übertragungsmittel eine der Komponente zugeordnete Information zum Abgleich der Zertifizierung bereitstellt.

3. Verfahren nach Anspruch 1 oder 2, weiter umfassend:
- Bereitstellen einer Identifikation durch mindestens ein Trägerelement, wobei die Identifikation insbesondere indikativ für Art der Komponente, für mindestens einen Hersteller der Komponente, für die individuelle Komponente und/oder für eine der Komponente zugeordnete Einsatzart ist.

4. Verfahren nach Anspruch 3, weiter umfassend:
- Erhalten (112) der von dem mindestens einen Trägerelement bereitgestellten Identifikation durch einen zentralen Kontroller (314) und/oder einen Host (322) und
- Hinterlegen (114) der Identifikation.

5. Verfahren nach Anspruch 3 oder 4, weiter umfassend:
Ermittlung einer Lebensdauer der Komponente anhand der Identifikation.

6. Verfahren nach einem der Ansprüche 2 bis 5, weiter umfassend:
- Authentifizierung eines Nutzers, wobei nach erfolgter Authentifizierung dem Nutzer Zugriff auf die zugeordneten Informationen mindestens eines Übertragungsmittels gewährt wird.

7. Verfahren nach einem der Ansprüche 1 bis 6, weiter umfassend:
- Zuordnung jeweils einer Rangfolge zu den mindestens zwei Komponenten, wobei das Abgleichen der Zertifizierung der mindestens zwei Komponenten zumindest teilweise abhängig von der zugeordneten Rangfolge durchgeführt wird.

8. Verfahren nach einem der Ansprüche 1 bis 7, weiter umfassend:
- Auslösen der Durchführung zumindest von Teilen des Verfahrens abhängig von einem Betriebsstatus mindestens einer Komponente.

9. Verfahren nach einem der Ansprüche 1 bis 8 , wobei
Der Abgleich der Zertifizierung der mindestens zwei Komponenten anhand der Trägerelemente unter Einbezug einer Prüfsumme erfolgt.

10. Komponente (202, 204, 302, 308a-c, 312a-b, 314) für ein Umrichtersystem, insbesondere für ein Umrichtersystem für Stromerzeugungsanlagen, die Komponente aufweisend:
- mindestens ein Verbindungselement, welches dafür eingerichtet ist, die Komponente mit mindestens einer weiteren Komponente zu verbinden; und
- mindestens ein Trägerelement (206, 208);
**dadurch gekennzeichnet, dass**
- das mindestens eine Trägerelement dafür eingerichtet ist, ein Verbinden der Komponente mit einer weiteren Komponente über das mindestens eine Verbindungsmittel nur dann zu erlauben, wenn das mindestens eine Trägerelement und ein Trägerelement der weiteren Komponente für einander zertifiziert sind.

11. Komponente nach Anspruch 10,
**dadurch gekennzeichnet, dass**
das mindestens eine Trägerelement geometrisch derart ausgestaltet ist, ein Verbinden der Komponente mit einer weiteren Komponente über das mindestens eine Verbindungsmittel nur dann zu erlauben, wenn das mindestens eine Trägerelement und ein Trägerelement der weiteren Komponente für einander zertifiziert sind.

12. Komponente nach Anspruch 10 oder 11,
**dadurch gekennzeichnet, dass**
das mindestens eine Trägerelement ein Übertragungsmittel, insbesondere ein RFID- und/oder NFC-Übertragungsmittel, zur Bereitstellung einer der Komponente zugeordneten Information zum Abgleich der Zertifizierung aufweist.

13. Komponente nach einem der Ansprüche 10 bis 12,
**dadurch gekennzeichnet, dass**
das Trägerelement Mittel zur Bereitstellung einer Identifikation umfasst, wobei die Identifikation insbesondere indikativ für Art der Komponente, für mindestens einen Hersteller der Komponente, für die individuelle Komponente und/oder für eine der Komponente zugeordnete Einsatzart ist.

14. Komponente nach einem der Ansprüche 10 bis 13,
**dadurch gekennzeichnet, dass**
mindestens ein elektronisches Bauteil vorgesehen ist, insbesondere mindestens ein IGBT, ein dezentraler Kontroller, ein zentraler Kontroller und/oder ein Treiber.

15. Komponente nach einem der Ansprüche 10 bis 14,
**dadurch gekennzeichnet, dass**
der Komponente über das mindestens eine Trägerelement eine Rangfolge zugeordnet ist, wobei das mindestens eine Trägerelement dafür eingerichtet ist, ein Verbinden der Komponente mit einer weiteren Komponente über das mindestens eine Verbindungsmittel zumindest teilweise abhängig von der zugeordneten Rangfolge zu erlauben.

16. Komponente nach einem der Ansprüche 10 bis 15,
**dadurch gekennzeichnet, dass**
ein Sicherungselement zur Sicherung des Trägerelements gegen Manipulationen vorgesehen ist.

17. Vorrichtung, welche dazu eingerichtet ist oder entsprechende Mittel umfasst, ein Verfahren (100, 200) nach einem der vorhergehenden Ansprüche durchzuführen und/oder zu steuern.

18. System (400), umfassend:
mehrere Vorrichtungen, welche zusammen ein Verfahren (100, 200) nach einem der vorhergehenden Verfahrensansprüche durchführen.
